(19) Europäisches Patentamt
European Patent Office
Office européen des brevets

(11) **EP 4 597 370 A1**

(12) **EUROPEAN PATENT APPLICATION**
published in accordance with Art. 153(4) EPC

(43) Date of publication:
**06.08.2025 Bulletin 2025/32**

(21) Application number: **23870792.1**

(22) Date of filing: **26.09.2023**

(51) International Patent Classification (IPC):
**G06N 3/048** (2023.01)

(52) Cooperative Patent Classification (CPC):
**G06N 3/048; G06N 5/04**

(86) International application number:
**PCT/CN2023/121487**

(87) International publication number:
**WO 2024/067563 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.09.2022 CN 202211186183**

(71) Applicant: **Hangzhou Hikvision Digital Technology Co., Ltd.
Hangzhou, Zhejiang 310051 (CN)**

(72) Inventors:
• **LAN, Chaoxiang
Hangzhou, Zhejiang 310051 (CN)**
• **LI, Zheyang
Hangzhou, Zhejiang 310051 (CN)**
• **ZHANG, Kai
Hangzhou, Zhejiang 310051 (CN)**

(74) Representative: **Michalski Hüttermann & Partner Patentanwälte mbB
Kaistraße 16A
40221 Düsseldorf (DE)**

(54) **TASK PROCESSING METHOD AND APPARATUS BASED ON MODEL QUANTIZATION, AND DEVICE AND STORAGE MEDIUM**

(57) The present disclosure provides a task processing method and apparatus, a device, and a storage medium based on model quantization, the task processing method includes: updating, based on a first difference between a first quantized output and a first floating-point output of an optimization unit in a Transformer model, a weight quantization factor and an activation quantization factor of the optimization unit; updating, based on a second difference between a second quantized output and a second floating-point output of the optimization unit, a weight quantization increment of the optimization unit; determining a weight quantization rounding direction of the optimization unit based on the target weight quantization increment; and quantizing the weight parameter of the optimization unit based on the target weight quantization factor and the weight quantization rounding direction; performing forward inference computation on input data of the optimization unit based on a target quantization weight parameter for the optimization unit, and quantizing an input/output of the optimization unit based on a target activation quantization factor of the optimization unit. The method can improve the accuracy of task processing.

For any one of optimization units in a Transformer model, obtain a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit — S100

In a case that the floating-point weight parameter, the target weight quantization factor and the target activation quantization factor of the optimization unit are fixed, obtain a target weight quantization increment of the optimization unit by updating, with a goal of minimizing a second difference between a second quantized output and a second floating-point output of the optimization unit, a weight quantization increment of the optimization unit — S110

Determine a weight quantization rounding direction of the optimization unit based on the target weight quantization increment, and obtain a target quantization weight parameter of the optimization unit by quantizing the weight parameter of the optimization unit based on the target weight quantization factor and the weight quantization rounding direction — S120

In a case that the Transformer model is used for task processing, for any one of the optimization units, perform forward inference computation on input data of the optimization unit based on the target quantization weight parameter for the optimization unit, and quantize the input/output of the optimization unit based on the target activation quantization factor of the optimization unit — S130

FIG. 1

**Description**

**TECHNICAL FIELD**

The present disclosure relates to the technical field of artificial intelligence, and in particular to a task processing method and apparatus based on model quantization, a device, and a storage medium.

**BACKGROUND**

When training a Neural Network (NN) or performing forward inference on device-side, a significant amount of Multiply-Accumulate Operations (MACs) using 32-bit floating-point numbers (float32) are required, consuming both storage and computational resources.

Replacing 32-bit floating-point numbers with lower-precision data formats (such as float 16, float8, low-precision integers like int8, int4, etc.) for operations can reduce resource consumption while enhancing model training and/or inference speed.

**In** the traditional model quantization scheme, only quantization factors are optimized, and the obtained quantization model usually has a large performance loss, which further affects the accuracy of task processing using the quantization model.

**SUMMARY**

**In** view of this, the present disclosure provides a task processing method and apparatus based on model quantization, a device, and a storage medium.

Specifically, the present disclosure is achieved by the following technical solution.

According to a first aspect of an embodiment of the present disclosure, there is provided a task processing method based on model quantization, including:

for any one of optimization units in a Transformer model, obtaining a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit, where the first quantized output includes an output result of the optimization unit when a weight parameter of the optimization unit is quantized based on the weight quantization factor and an input and an output of the optimization unit are quantized based on the activation quantization factor, and the first floating-point output includes an output result of the optimization unit when the weight parameter of the optimization unit is a floating-point weight parameter and the input is a floating-point input;

in a case that the floating-point weight parameter, the target weight quantization factor and the target activation quantization factor of the optimization unit are fixed, obtaining a target weight quantization increment of the optimization unit by updating, with a goal of minimizing a second difference between a second quantized output and a second floating-point output of the optimization unit, a weight quantization increment of the optimization unit, where the second quantized output includes an output result of the optimization unit when the weight parameter of the optimization unit is quantized based on the target weight quantization factor and quantization adjustment is performed based on the weight quantization increment, and the input and the output of the optimization unit are quantized based on the target activation quantization factor, and the second floating-point output includes an output result of the optimization unit when the weight parameter of the optimization unit is the floating-point weight parameter and the input is a floating-point input;

determining a weight quantization rounding direction of the optimization unit based on the target weight quantization increment;

obtaining a target quantization weight parameter of the optimization unit by quantizing the weight parameter of the optimization unit based on the target weight quantization factor and the weight quantization rounding direction; and

in a case that the Transformer model is used for task processing, for any one of the optimization units, performing forward inference computation on input data of the optimization unit based on the target quantization weight parameter for the optimization unit, and quantizing the input and the output of the optimization unit based on the target activation quantization factor of the optimization unit.

According to a second aspect of an embodiment of the present disclosure, there is provided a task processing apparatus based on model quantization, including:

a first determination unit, configured to, for any one of optimization units in a Transformer model, obtain a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit, where the first quantized output includes an output result of the optimization unit when a weight parameter of the optimization unit is quantized based on the weight quantization factor and an input and an output of the optimization unit are quantized based on the activation quantization factor, and the first floating-point output includes an output result of the optimization unit when the weight parameter of the optimization unit is a floating-point weight parameter and the input is a floating-point input; a second determination unit, configured to, in a case that the floating-point weight parameter, the target weight quantization factor and the target activation quantization factor of the optimization unit are fixed, obtain a target weight quantization increment of the optimization unit by updating, with a goal of minimizing a second difference between a second quantized output and a second floating-point output of the optimization unit, a weight quantization increment of the optimization unit, where the second quantized output includes an output result of the optimization unit when the weight parameter of the optimization unit is quantized based on the target weight quantization factor and quantization adjustment is performed based on the weight quantization increment, and the input and the output of the optimization unit are quantized based on the target activation quantization factor, and the second floating-point output includes an output result of the optimization unit when the weight parameter of the optimization unit is the floating-point weight parameter and the input is a floating-point input; a quantization unit, configured to determine a weight quantization rounding direction of the optimization unit based on the target weight quantization increment, obtain a target quantization weight parameter of the optimization unit by quantizing the weight parameter of the optimization unit based on the target weight quantization factor and the weight quantization rounding direction; and a task processing unit, configured to in a case that the Transformer model is used for task processing, for any one of the optimization units, perform forward inference computation on input data of the optimization unit based on the target quantization weight parameter for the optimization unit, and quantize the input and the output of the optimization unit based on the target activation quantization factor of the optimization unit.

According to a third aspect of an embodiment of the present disclosure, there is provided an electronic device including a processor and a memory, where the memory stores machine-executable instructions that can be executed by the processor, and the processor is configured to execute the machine-executable instructions to realize the method provided in the first aspect.

According to a fourth aspect of an embodiment of the present disclosure, there is provided a storage medium having stored therein machine-executable instructions which, when executed by a processor, realize the method provided in the first aspect.

The technical solution provided by the present disclosure may bring at least the following beneficial effects: in the process of quantizing the Transformer model, not only the quantization factors (including the weight quantization factor and the activation quantization factor) are optimized, but also the weight quantization rounding direction is optimized, which effectively improves the performance of the quantization model and further improves the accuracy of task processing when using the quantization model.

**BRIEF DESCRIPTION OF DRAWINGS**

FIG. 1 is a flowchart of a task processing method based on model quantization according to an embodiment of the present disclosure.
FIG. 2 is a schematic diagram of an artificial intelligence main framework according to an embodiment of the present disclosure.
FIG. 3 is a schematic diagram of a process for optimizing a quantization factor according to an embodiment of the present disclosure.
FIG. 4 is schematic structural diagram of a task processing apparatus based on model quantization according to an embodiment of the present disclosure.
FIG. 5 is a hardware structural diagram of an electronic device according to an embodiment of the present disclosure.

**DETAILED DESCRIPTION**

Reference will now be made in detail to exemplary embodiments, examples of which are illustrated in the accompanying drawings. When the following description refers to the accompanying drawings, unless otherwise indicated, the same numbers in different accompanying drawings indicate the same or similar elements. Embodiments described in the following exemplary embodiments do not represent all embodiments consistent with the present disclosure. Rather, they are merely examples of apparatuses and methods consistent with some aspects of the present disclosure as detailed in the appended claims.

Terms used in the present disclosure are only for a purpose of describing specific embodiments, and are not limiting the present disclosure. Singular forms of "a," said," and "the" used in the present disclosure and in the claims are also intended to include majority forms, unless the context clearly indicates otherwise.

**In** order to enable those skilled in the art to better understand the technical solutions provided by the embodiments of the present disclosure, and make the above objects, features and advantages of the embodiments of the present disclosure more apparent and easier to understand, the technical solutions in the embodiments of the present disclosure will be further described in detail below with reference to the accompanying drawings.

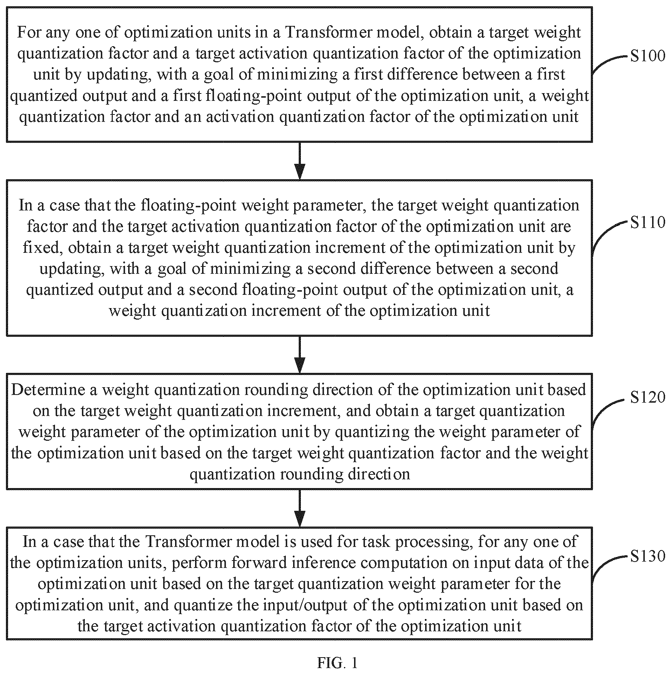

Please refer to FIG. 1, which is a flowchart of a task processing method based on model quantization according to an embodiment of the present disclosure. As shown in FIG. 1, the task processing method based on model quantization may include the following steps.

Step S100: for any one of optimization units in a Transformer model, obtaining a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit, where the first quantized output includes an output result of the optimization unit when a weight parameter of the optimization unit is quantized based on the weight quantization factor and an input/ output of the optimization unit are quantized based on the activation quantization factor, and the first floating-point output includes an output result of the optimization unit when the weight parameter of the optimization unit is a floating-point weight parameter and the input is a floating-point input. The input/output of the optimization unit may include input/output data, which is calculated in a quantization state.

Step S110: in a case that the floating-point weight parameter, the target weight quantization factor and the target activation quantization factor of the optimization unit are fixed, obtaining a target weight quantization increment of the optimization unit by updating, with a goal of minimizing a second difference between a second quantized output and a second floating-point output of the optimization unit, a weight quantization increment of the optimization unit, where the second quantized output includes an output result of the optimization unit when the weight parameter of the optimization unit is quantized based on the target weight quantization factor and quantization adjustment is performed based on the weight quantization increment, and the input/output of the optimization unit are quantized based on the target activation quantization factor, and the second floating-point output includes an output result of the optimization unit when the weight parameter of the optimization unit is the floating-point weight parameter and the input is a floating-point input.

It should be noted that quantization means that in the process of model calculation, the parameters and features represented by floating-point numbers are approximately represented by fixed-point values to improve the operation speed. The Transformer model is a new type of neural network that learns context and thus meaning by tracking relationships in a sequence. The Transformer model can perform well in parallel training and utilizes self-attention mechanism. However, compared to traditional neural network models, such as Recurrent Neural Networks (RNNs), the Transformer model exhibits a doubling of complexity and network parameter volume, leading to a sharp increase in the demand for computing power and data storage. Quantizing the model can reduce the demand for computing power and storage of the model, but at the cost of reducing the final performance of the model.

Different Transformer models use different precision, in general, the floating point used can be float32 or float16. Floating-point weight parameter, floating-point output and floating-point input are numerical expression types before quantization and compression.

In the embodiments of the present disclosure, considering that the quantization factors ultimately used in the process of quantizing the Transformer model affect the performance of the quantization model, there is a need to determine suitable quantization factors to reduce a difference between output features of a quantization model (i.e., a quantized Transformer model) and a floating-point model (i.e., an unquantized Transformer model), and to improve the performance of the quantization model.

Furthermore, in traditional model quantization schemes, a Round-To-Nearest method is generally adopted uniformly for quantization rounding. However, not all quantization processes benefit optimally from the Round-To-Nearest method. Therefore, adaptive quantization rounding directions (such as rounding up or rounding down) can reduce the difference in output features between the quantization model and the floating-point model, thereby enhancing the performance of the quantization model.

That is, in the embodiments of the present disclosure, the performance of the Transformer quantization model is improved by optimizing the quantization factor and the quantization rounding direction.

In the embodiment of the present disclosure, the Transformer model can be regarded as a stack of multiple modules (which can be named as Block) in a certain order.

For example, one Block may include a single layer or a functional unit consisting of multiple layers.

In an example, the optimization unit in the Transformer model may include a Transformer Stage, a Transformer Block, or a single linear layer.

For example, a layer is a unit composed of a single operation. When layers are stacked together in a specific order, they can be considered as a whole named as a module (Block). Blocks of the same type stacked together constitute a Stage. Transformer Block includes but is not limited to encoder block and decoder block.

For example, considering the mutual influence between multiple layers in the Transformer model, if quantization factors and quantization rounding directions of these layers are optimized separately without considering the mutual influence within these layers, the optimization performance may be poor.

Correspondingly, to consider the inter-layer mutual influence relationship during the optimization process of quantization factors and quantization rounding directions, when determining the optimization unit in the Transformer model, the Transformer Block is generally taken as a basic optimization unit. In addition, a single linear layer can also be taken as an optimization unit.

It should be noted that for a single nonlinear layer, since it does not have weight parameters and does not involve the quantization of weight parameters, there is no need to optimize a quantization rounding direction for a single nonlinear layer.

In the embodiment of the present disclosure, in the process of quantizing the Transformer model, Block can be used as a basic unit (which can be named as an optimization unit), and each optimization unit can be optimized in the quantization factor and the quantization rounding direction in order with the goal of minimizing the output difference of the optimization unit before and after quantization.

The Transformer model may include a plurality of optimization units, and in practical application, the task processing method provided by the embodiments of the present disclosure may be performed on all or part of the optimization units.

For example, the quantization factor may include a weight quantization factor (for quantizing a weight parameter) and an activation quantization factor.

The activation quantization factor may include an input/output quantization factor for quantizing the input data/output data.

In the embodiment of the present disclosure, for any one of optimization units in the Transformer model, an output result of the optimization unit (referred to herein as a first quantized output) can be obtained under the condition that a weight parameter of the optimization unit is quantized according to a current weight quantization factor, and an input/output of the optimization unit is quantized according to a current activation quantization factor. Additionally, a floating-point output result of the optimization unit (referred to herein as a first floating-point output) can be obtained under the condition that the weight parameter of the optimization unit is a floating-point weight parameter and the input is a floating-point input, and the current weight quantization factor and the current activation quantization factor of the optimization unit are updated with the goal of minimizing a difference between the first quantized output and the first floating-point output, so as to obtain a weight quantization factor (referred to herein as a target weight quantization factor) and an activation quantization factor (referred to herein as a target activation quantization factor) used by the optimization unit in the actual quantization process.

For example, for any one of the optimization units, in the process of updating the weight quantization factor and the activation quantization factor of the optimization unit, before the first update is completed, the values of the current weight quantization factor and the current activation quantization factor may be initial values. After the first update is completed, the values of the current weight quantization factor and the current activation quantization can be values of the weight quantization factor and the activation quantization factor when the last update is completed.

For example, for any one of the optimization units, when obtaining the first floating-point output of the optimization unit, each optimization unit in the Transformer model can be in a floating-point mode. When obtaining the first quantized output of the optimization unit, the optimization units before the optimization unit may all be in the quantization mode.

It should be noted that in the embodiments of the present disclosure, when determining the difference between the first quantized output and the first floating-point output, it is the difference between the first quantized output and the first floating-point output of the optimization unit with the same data input to the Transformer model.

For example, prepared data (such as a plurality of unlabeled pictures) can be input into the Transformer model in batches. When one batch of data is input into the Transformer model, for any one of the optimization units, the weight quantization factor and the activation quantization factor of the optimization unit can be updated according to the difference between the first floating-point output and the first quantized output corresponding to the batch of data. For example, multiple epochs (one epoch refers to inputting all the prepared data into the Transformer model to update) can also be used to update the weight quantization factor and the activation quantization factor of the optimization unit.

For example, for any one of the optimization units, it is necessary to consider the quantization factor of input/output activation feature of the unit at the same time when optimizing the quantization factor of the unit.

Specifically, for a non-first optimization unit or a non-last optimization unit, the activation quantization factors of the optimization unit may include a quantization factor for input data and/or a quantization factor for output data.

When an activation quantization factor of an optimization unit is a quantization factor for input data, for the last optimization unit, the activation quantization factor of the optimization unit may further include a quantization factor for output data (the activation quantization factor of the first optimization unit is also a quantization factor for input data).

When an activation quantization factor of an optimization unit is a quantization factor for output data, for the first optimization unit, the activation quantization factor of the optimization unit may further include a quantization factor for input data (the activation quantization factor of the last optimization unit is also a quantization factor for output data).

In the embodiment of the present disclosure, in order to further optimize the performance of the quantization model, under the condition that the target weight quantization factor and the target activation quantization factor of the optimization unit are determined, the quantization rounding direction can also be optimized to determine the optimal quantization rounding direction, instead of performing quantization rounding in a fixed round-to-nearest manner.

Considering that for any one of the optimization units, its output will change with the input of Transformer model, and the input of Transformer model cannot be predicted in the actual task processing, therefore, it is impossible to determine or predict the optimal quantization rounding direction of input/output of optimization unit by testing.

The activation quantization factor depends on quantization precision (such as the number of bits after quantization) and quantization range. The quantization range of the input of the Transformer model can be obtained through statistics, and the quantization precision can be 8 bits, 4 bits, etc.

Correspondingly, for any one of the optimization units, the weight is fixed during the inference process, and the optimization of the quantization rounding direction only needs to be performed once, without introducing additional inference computation cost.

For example, for any one of optimization units, the floating-point weight parameter, target weight quantization factor, and target activation quantization factor of the optimization unit can be fixed, and the quantization input and floating-point output of the optimization unit may be obtained respectively for the optimization unit with the same input data of the Transformer model.

For example, when obtaining the quantization input of the optimization unit, the weight parameter of the optimization unit can be quantized according to the above-mentioned target weight quantization factor, and the quantized weight parameter can be quantized and adjusted according to the current weight quantization increment, and the input/output of the optimization unit can be quantized according to the above-mentioned target activation quantization factor, and the output result of the optimization unit in this case can be obtained (referred to herein as the second quantized output).

For example, for any one of the optimization units, the weight quantization increment is used to adjust a quantization weight parameter of the optimization unit (the quantization weight parameter is obtained by quantizing the weight parameter according to the target weight quantization factor) by giving the quantization weight parameter an increment with a value ranging from 0 to 1, so as to determine an optimal quantization rounding direction (rounding up or down) when quantizing the weight parameter.

The inventors of the present disclosure have found that the quantization rounding direction with a round-to-nearest manner results in the smallest error locally, but in actual measurements, especially in low-precision quantization scenarios, the round-to-nearest manner is not optimal for the overall performance of the quantization model, as quantization errors can accumulate and amplify during forward inference. Based on this, in the embodiment of the present disclosure, in order to ensure that the difference between the output of the quantization model and the output of the floating-point model is as small as possible (fitting the expectation), an adaptive round-up or round-down method is adopted.

For example, if the increment of the quantization weight parameter is closer to 1 according to the weight quantization increment, the difference between the second quantized output and the second floating-point output is smaller, which indicates that the performance of rounding up is better when quantizing the weight parameter. If the increment of quantization weight parameter is closer to 0 according to the weight quantization increment, the difference between the second quantized output and the second floating-point output is smaller, which indicates that the performance of rounding down is better when quantizing the weight parameter.

For example, when obtaining the floating-point output of the optimization unit, an output of the optimization unit (referred to herein as a second floating-point output) can be obtained when the weight parameter of the optimization unit is a floating-point weight parameter and the input is a floating-point input.

For example, for any one of the optimization units, in the process of updating the weight quantization increment of the optimization unit, before the first update is completed, a current weight quantization increment may be an initial value. After the first update is completed, the value of the current weight quantization increment may be a value of the weight quantization increment when the last update is completed.

It should be noted that for any one of the optimization units, the first floating-point output and the second floating-point output are the same under the condition that the inputs of the Transformer model are the same.

For example, based on a difference between the second quantized output and the second floating-point output of the optimization unit, and with a goal of minimizing the difference, the weight quantization increment of the optimization unit can be iteratively updated to obtain a final weight quantization increment of the optimization unit (referred to herein as a target weight quantization increment), which can be used to determine a weight quantization rounding direction of the optimization unit.

Step S120: determining a weight quantization rounding direction of the optimization unit based on the target weight quantization increment, and obtaining a target quantization weight parameter of the optimization unit by quantizing the weight parameter of the optimization unit based on the target weight quantization factor and the weight quantization rounding direction.

**In** the embodiment of the present disclosure, for any one of the optimization units, under the condition that the target weight quantization factor and the target weight quantization increment of the optimization unit are determined in the above manner, the weight parameter of the optimization unit and the determined weight quantization rounding direction of the optimization unit can be quantized according to the target weight quantization factor to obtain a final quantization weight parameter of the optimization unit (which can be named as a target quantization weight parameter).

Step S130: in a case that the Transformer model is used for task processing, for any one of the optimization units, performing forward inference computation on input data of the optimization unit based on the target quantization weight parameter for the optimization unit, and quantizing the input/output of the optimization unit based on the target activation quantization factor of the optimization unit.

**In the** embodiment of the present disclosure, in a case that the Transformer model is used for task processing, forward inference computation can be performed on input data of the optimization unit based on the target quantization weight parameter for the optimization unit, and the input/output of the optimization unit can be quantized based on the target activation quantization factor of the optimization unit.

For example, for any one of the optimization units, if the target activation quantization factor of the optimization unit includes the quantization factor for the input data, the optimization unit can quantize the input data of the optimization unit according to the quantization factor for the input data, and perform forward inference computation on the quantized input data according to the target quantization weight parameter of the optimization unit, thus improving the model inference speed and further improving the task processing efficiency under the condition of ensuring the model performance.

For example, for any one of the optimization units, the input data of the optimization unit can be quantized according to the target activation quantization factor, and then the forward inference computation of the optimization unit can be performed using the quantized input data to obtain initial output data of the optimization unit, and the initial output data can be quantized according to the target activation quantization factor. When performing forward inference computations, the parameters involved are quantized based on the target quantization weight parameter of the optimization unit.

For example, the above task processing includes, but is not limited to, Natural Language Processing (NLP) tasks (such as machine translation), or Speech tasks (such as speech recognition), or Computer Vision (CV) tasks (such as classification, target detection or target tracking tasks, etc.).

It can be seen that in the method flow shown in FIG. 1, in the process of quantizing the Transformer model, not only the quantization factors (including the weight quantization factor and the activation quantization factor) are optimized, but also the weight quantization rounding direction is optimized, which effectively improves the performance of the quantization model and further improves the accuracy of task processing when using the quantization model.

In some embodiments, the above obtaining a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit may include:

determining a first quantization loss of the optimization unit by using a first preset loss function and based on the first quantized output and the first floating-point output of the optimization unit; and
obtaining the target weight quantization factor and the target activation quantization factor of the optimization unit by iteratively updating, with a goal of minimizing the first quantization loss of the optimization unit, the weight quantization factor and the activation quantization factor of the optimization unit by using a gradient descent algorithm until a first preset termination condition is met.

For example, for any one of the optimization units, in the process of determining the target weight quantization factor and the target activation quantization factor of the optimization unit, a quantization loss (referred to herein as a first quantization loss) of the optimization unit can be determined by using a preset loss function (referred to herein as a first preset loss function), such as mean square error loss function, absolute value loss function, etc., and based on the first quantized output and the first floating-point output of the optimization unit. Then, based on the first quantization loss of the optimization unit, and with a goal of minimizing the first quantization loss, the weight quantization factor and the activation quantization factor of the optimization unit can be iteratively updated by using a gradient descent algorithm until a first preset termination condition is met, such as the number of iterations reaches a preset maximum number of iterations, and/or the loss function converges, etc., so as to obtain the target weight quantization factor and the target activation quantization factor of the optimization unit.

In some embodiments, the above obtaining a target weight quantization increment of the optimization unit by updating, with a goal of minimizing a second difference between a second quantized output and a second floating-point output of the optimization unit, a weight quantization increment of the optimization unit may include:

> determining a second quantization loss of the optimization unit by using a second preset loss function and based on the second quantized output and the second floating-point output of the optimization unit; and
> obtaining the target weight quantization increment of the optimization unit by iteratively updating, with a goal of minimizing the second quantization loss of the optimization unit, the weight quantization increment of the optimization unit by using a gradient descent algorithm until a second preset termination condition is met.

For example, for any one of the optimization units, under the condition that the target weight quantization factor of the optimization unit is determined, the second quantized output and the second floating-point output of the optimization unit can be determined in the above manner, a quantization loss (referred to herein as a second quantization loss) of the optimization unit can be determined by using a preset loss function (referred to herein as a second preset loss function), such as mean square error loss function, absolute value loss function, etc., and based on the second quantized output and the second floating-point output of the optimization unit. Then, based on the second quantization loss of the optimization unit, and with a goal of minimizing the second quantization loss, the weight quantization increment of the optimization unit can be iteratively updated by using a gradient descent algorithm until a second preset termination condition is met, such as the number of iterations reaches a preset maximum number of iterations, and/or the loss function converges, etc., so as to obtain the target weight quantization increment of the optimization unit.

The first preset termination condition and the second preset termination condition may be the same or different, and may be set according to actual situation, and the present disclosure does not limit this.

In an example, quantizing the weight parameter of the optimization unit based on the target weight quantization factor and performing adjustment based on the weight quantization increment may be achieved by following formula:

$$W'' = Floor(W/s) + sigmoid\left(\frac{V}{t}\right)$$

where, W'' is a weight parameter after quantization adjustment of the optimization unit, W is the floating-point weight parameter of the optimization unit, s is the target weight quantization factor, V is the weight quantization increment used to adjust the quantization rounding direction, and t is a hyperparameter (temperature coefficient) for controlling the sigmoid function, used to control a steepness of the sigmoid function, in the process of iteratively updating the weight quantization increment of the optimization unit, t gradually decreases, the shape of the sigmoid function gradually transitions into a step function, and Floor () is a rounding down operation.

For example, for any one of the optimization units, in the process of determining the optimal weight quantization rounding direction of the optimization unit, the quantization rounding function can be replaced from a Round function (i.e., a round-to-nearest function) to a Floor function (i.e., a rounding down function). The weight parameter of the optimization unit is quantized based on the target weight quantization factor of the optimization unit, and the increment of the quantization weight parameter may be determined by using sigmoid function according to the current weight quantization increment.

The sigmoid function is a common curve function with a monotonically increasing property that maps variables to the range of 0 to 1. When the variable is less than 0, the value of sigmoid function is less than 0.5. When the variable is greater than 0, the value of sigmoid function is greater than 0.5.

Through the above formula, when the value of V is greater than 0, an increment greater than 0.5 is added to the quantization weight parameter, and the larger V/t is, the closer this increment is to 1. When the value of V is less than 0, an increment less than 0.5 is added to the quantization weight parameter, and the smaller V/t is, the closer this increment is to 0. Further, through iterative updates of V, an optimal weight quantization increment (i.e., the target weight quantization increment) can be determined, and an optimal quantization rounding direction of the optimization unit can be determined according to the target weight quantization increment.

In some embodiments, the above obtaining a target quantization weight parameter of the optimization unit by quantizing the weight parameter of the optimization unit based on the target weight quantization factor and the weight quantization rounding direction may be achieved by following formula:

$$W_q = Floor(W/s) + (V > 0?\ 1:0)$$

where, $W_q$ is the final (target) quantization weight parameter of the optimization unit, W is the floating-point weight parameter of the optimization unit, s is the target weight quantization factor, V is the target weight quantization increment, and Floor () is a rounding down operation, $(V > 0 ? 1 : 0)$ indicates that a value is 1 when $V > 0$ is true, and the value is 0 when $V > 0$ is false.

For example, when the target weight quantization increment is determined in the above manner, the optimal weight quantization rounding direction can be determined according to the target weight quantization increment.

For example, when the target weight quantization increment is greater than 0, the optimal quantization rounding direction can be determined as rounding up; when the target weight quantization increment is less than 0, the optimal quantization rounding direction can be determined as rounding down.

In some embodiments, determining a quantization loss of the optimization unit by using a preset loss function and based on quantized output and floating-point output of the optimization unit includes:

determining a standard deviation of the floating-point output of the optimization unit based on the floating-point output of the optimization unit;

obtaining a processed quantized output by respectively dividing the quantized output of the optimization unit by the standard deviation; and obtaining a processed floating-point output by dividing the floating-point output of the optimization unit by the standard deviation; and

determining the quantization loss of the optimization unit by using a mean squared error loss function and based on the processed quantized output and the processed floating-point output.

For example, considering that the output features of the optimization unit are usually multidimensional data, and the values of different dimensions may be quite different, for example, taking 3-dimensional data as an example, a value of the first dimension may be 0~1, a value of the second dimension may be 10~100, and a value of the third dimension may be 100~1000. In such cases, if the quantization loss is directly calculated using the mean squared error loss function based on the floating-point output and quantized output of the optimization unit, the computation results may result in too much attention being paid to the value of a certain dimension, which may affect the optimization effect.

In order to avoid the above problems and improve the optimization effect, in the process of determining the quantization loss of the optimization unit based on the quantized output and the floating-point output of the optimization unit, e.g., in the process of determining the first quantization loss of the optimization unit based on the first quantized output of the optimization unit and the first floating-point output of the optimization unit, or, in the process of determining the second quantization loss of the optimization unit based on the second quantized output of the optimization unit and the second floating-point output of the optimization unit, a standard deviation of the floating-point output of the optimization unit along a certain dimension may be calculated first, based on the floating-point output of the optimization unit.

Take determining the first quantization loss of the optimization unit according to the first quantized output and first floating-point output of the optimization unit as an example (the same can be achieved by determining the second quantization loss of the optimization unit according to the second quantized output and second floating-point output of the optimization unit).

For any one of optimization units, a standard deviation of a first floating-point output of the optimization unit along a certain dimension can be determined according to the first floating-point output of the optimization unit, and the first quantized output of the optimization unit can be divided by the standard deviation to obtain a processed first quantized output, and the first floating-point output of the optimization unit can be divided by the standard deviation to obtain a processed first floating-point output, and then the first quantization loss of the optimization unit is determined using the mean squared error loss function based on the processed first quantized output and the processed first floating-point output.

In order to enable those skilled in the art to better understand the technical solutions provided by the embodiments of the present disclosure, the technical solutions provided by the embodiments of the present disclosure will be described below with reference to specific embodiments.

1. The following is a brief description of an artificial intelligence main framework.

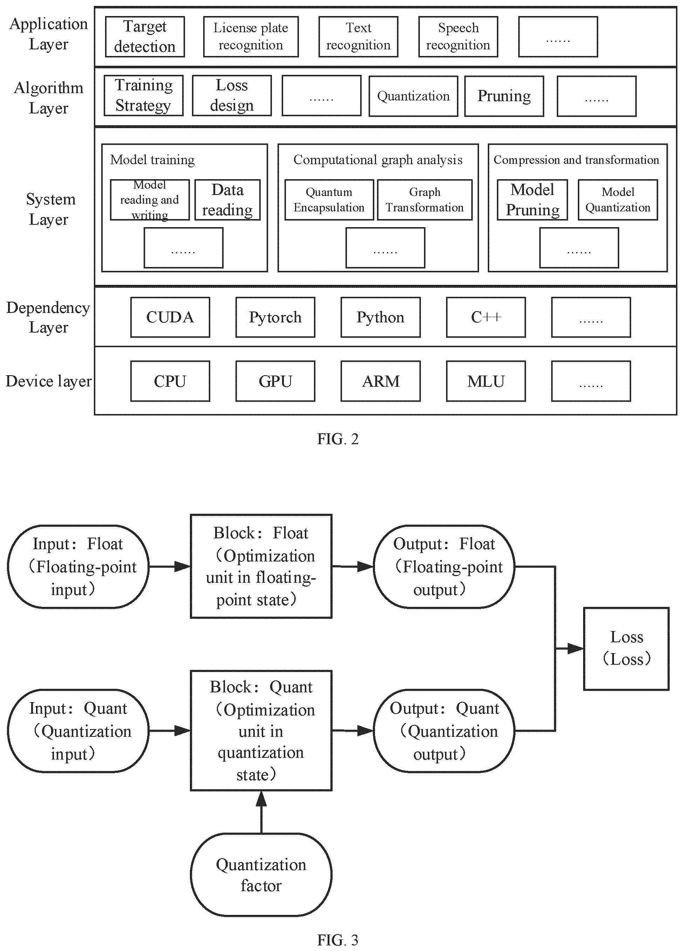

As shown in FIG. 2, the artificial intelligence main framework may include five layers: application layer, algorithm layer, system layer, dependency layer and device layer. There is interdependence from top to bottom. Meanwhile, it leans towards practical applications upwards and towards underlying hardware downwards.

1.1 Application Layer: By analyzing requirements, problems are positioned on the corresponding branch of artificial intelligence.

1.2 Algorithm Layer: Strategies for model training, loss functions, and subsequent compression algorithms are designed according to application scenarios.

1.3 System Layer: Models are built using deep learning frameworks, the built models are trained, and computational graph analysis and model compression are performed.

1.4. Dependency Layer: Language or deep learning framework realized by an algorithm, which uses an external interface and protocol of a device to call the corresponding device.

1.5. Device layer: It is composed of computing units and provides computing power support for artificial intelligence systems.

2. The implementation of the training-free quantization scheme for the Transformer model in this embodiment (where unlabeled data is used during the quantization process of the Transformer model) will be described below.

In this embodiment, considering that it is not optimal to adopt a fixed round-to-nearest method in the quantization process, in the quantization process of the Transformer model, the difference in output features between the quantization model and the floating-point model can be reduced by optimizing the weight quantization rounding direction and quantization factors, thereby improving the performance of the quantization model.

2.1 Quantization Algorithm Performance

To-be-quantified Model: swin-tiny ImageNet classification model;

Precision setting: 848, with 8-bit quantization for input and output, and 4-bit quantization for weights (the floating-point model corresponds to 32-bit quantization);

Data volume: 1024 unlabeled pictures;

Time required for quantization: approximately 30 minutes;

For example, the time required for quantization is unrelated to quantization precision and depends on the number of algorithm iterations and model size.

Performance: floating-point performance acc@top1=81.18, quantization performance acc@top1=80.57.

2.2 The basic process of the quantization scheme in this embodiment is as follows.

2.2.1. Balance numerical differences between channels of Shortcut addition by Eltwise (Element-wise Operation Layer) -With-Bias (ELT for short);

For example, each Transformer Block layer includes a Shortcut addition layer, and the corresponding Shortcut layer can be replaced by an Eltwise layer. The Eltwise layer is a general term for a functional layer in a neural network, characterized by performing element-wise (same position) addition on two or more data blocks of the same size.

During data processing in the Eltwise layer, there may be significant differences in data precision among the data blocks input to the Eltwise layer, which leads to the data range of each data block being also quite different. Consequently, the overall distribution variance of the element-wise operation results obtained after performing element-wise operations on each data block is also large, resulting in lower data precision of the element-wise operations.

In order to solve this problem, for each data block input to the Eltwise layer, corresponding compensation coefficients can be set for each channel of each data block, that is, compensation coefficients refined to the input channel level are proposed, which can compensate data range differences on each channel of each data block, and then compensate the data range differences of these data blocks, so that data precision ranges of these data blocks are also compensated. Thereby converting the data blocks into data blocks with the same data accuracy to align the data accuracy of data in different channels, so that an overall distribution variance of the element-wise operation results obtained after the element-wise operation based on the compensated data is reduced and the data precision is improved.

For example, after multiplying each channel of each data block with the corresponding compensation coefficient and adding the multiplication results, the addition result can be added with an offset coefficient (which can be represented by bias).

The offset coefficient refers to a compensation coefficient used for correcting data zero-point drift. After obtaining an operation result by performing element-wise operations on n compensation data blocks, adding the operation result to the offset coefficient can correct the zero-point drift after the element-wise operations, reduce the zero-point drift that may occur in each data channel, and further reduce the data error of the element-wise operations.

2.2.2. Insert a quantization node for quantization weight or quantization activation (i.e. input/output).

For example, the precision of the quantization node is optional.

2.2.3. Initialize a quantization factor of the quantization node with picture data (which may include part or all of the above 1024 pictures).

For example, a calculation method for an initial value of the quantization factor can be:

$$alpha = xmax \,/\, nlevel$$

Where xmax is a quantization boundary and nlevel is the number of quantization levels.

For example, the quantification boundary depends on a boundary truncation method. For example, the boundary truncation method may include: max, percentile, OMSE, etc.

For example, the number of quantization levels depends on the number of quantization bits (i.e., precision) b.

For example, the number of quantization levels can be calculated as follows:

**EP 4 597 370 A1**

$$\text{nlevel} = 2^{b-1} - 1$$

2.2.4 Select an optimization unit.

For example, a model can be viewed as modules stacked in a certain order. A module can be a single layer or a combination of multiple layers.

For example, a module can be referred to as a Block. The optimization algorithm takes a Block as a basic unit (i.e., optimization unit), and by optimizing a quantization factor and a weight quantization rounding direction, a difference in output features of the Block before and after quantization is reduced, thus improving the performance of the quantization model.

For example, a selection method for the optimization unit in this embodiment is as follows.

2.2.4.1 A single Transformer Block serves as a basic optimization unit.

2.2.4.2 In addition to the Transformer Block, a single linear layer serves as an optimization unit.

2.2.5. Optimize quantization factors

For example, a Round function is used as a quantization rounding function, quantization factors are regarded as learnable parameters, and the quantization factors (including a weight quantization factor and an activation quantization factor) are adjusted by minimizing a difference between a floating-point output and a quantized output of the same optimization unit. The realization flow can be as shown in FIG. 3, including the following flow.

2.2.5.1 In a floating-point mode, input picture data (such as the above-mentioned 1024 pictures) (corresponding to Input: Float in FIG. 3) to obtain a floating-point output $Y_{f1}$ of the optimization unit (i.e., the above-mentioned first floating-point output) (corresponding to Output: Float in FIG. 3);

2.2.5.2. In a quantization mode, input picture data (such as the above-mentioned 1024 pictures) (corresponding to Input: Quant in FIG. 3) to obtain a quantized output $Y_{q1}$ of the optimization unit (i.e., the above-mentioned first quantized output) (corresponding to Output: Quant in FIG. 3);

2.2.5.3 Calculate an optimization unit difference $L(Y_{f1}, Y_{q1})$ (i.e., the above-mentioned first quantization loss) (corresponding to Loss in FIG. 3), and iteratively update the quantization factors using a Learning Step Quantization (LSQ) algorithm to obtain the final quantization factors (i.e., the above-mentioned target weight quantization factor and target activation quantization factor).

2.2.6. Optimize a weight quantization rounding direction

For example, a floating-point weight parameter and quantization factors (i.e., the above-mentioned target weight quantization factor and target activation quantization factor) can be fixed, and the weight quantization rounding direction (rounding direction of weight quantization) can be optimized by optimizing a weight quantization increment. The specific implementation flow is as follows:

2.2.6.1. The quantization rounding function of the weight quantization node is replaced from the Round function to a Floor function.

2.2.6.2. Define the weight quantization increment as parameter V and initialize the parameter.

2.2.6.3 The quantization process during the iterative update of V is:

$$W'' = Floor(W/s) + sigmoid\left(\frac{V}{t}\right)$$

where, W" is a weight parameter after quantization adjustment of the optimization unit, W is the floating-point weight parameter of the optimization unit, s is the target weight quantization factor, V is the weight quantization increment, and t is a hyperparameter for controlling the sigmoid function (temperature coefficient), in the process of iteratively updating the weight quantization increment of the optimization unit, t gradually decreases, and Floor () is a rounding down operation.

For example, the iterative update process of V can be decomposed into the following execution steps.

1) In the floating-point mode, input picture data (such as the above-mentioned 1024 pictures) to obtain a floating-point output $Y_{f2}$ of the optimization unit (i.e., the above-mentioned second floating-point output).

2) In the quantization mode, input picture data (such as the above-mentioned 1024 pictures) to obtain a quantized output $Y_{q2}$ of the optimization unit (i.e., the above-mentioned second quantized output).

3) Calculate an optimization unit difference $L(Y_{f2}, Y_{q2})$ (i.e. the above-mentioned second quantization loss), and iteratively update V through a gradient descent algorithm.

4) During the iteration process, the temperature coefficient t continuously decreases, causing the Sigmoid function to degenerate into a step function.

In the process of quantizing the weight parameter according to the target weight quantization factor and the target weight quantization increment, the quantization process is as follows:

$$W_q = Floor(W/s) + (V > 0?\ 1:0)$$

where, $W_q$ is the target quantization weight parameter of the optimization unit, W is the floating-point weight parameter of the optimization unit, s is the target weight quantization factor, V is the target weight quantization increment, and Floor () is a rounding down operation, ($V > 0$? 1: 0) indicates that a value is 1 when V > 0 is true, and the value is 0 when V > 0 is false.

In this embodiment, considering that the output features of the optimization unit are usually multidimensional data, and the values of different dimensions may be quite different, for example, taking 3-dimensional data as an example, a value of the first dimension may be 0~1, a value of the second dimension may be 10~100, and a value of the third dimension may be 100~1000. In such cases, if the quantization loss is directly calculated using the mean squared error loss function based on the floating-point output and quantized output of the optimization unit, the computation results may result in too much attention being paid to the value of a certain dimension, which may affect the optimization effect.

In order to avoid the above problems and improve the optimization effect, when determining the quantization loss of the optimization unit according to the quantized output and floating-point output of the optimization unit, such as $L(Y_{f1}, Y_{q1})$ or $L(Y_{f2}, Y_{q2})$ mentioned above, the standard deviation of the floating-point output feature on each Token can be used to balance a Token difference between the floating-point output feature and the quantized output feature, and then calculate the mean square error.

For example, a standard deviation of the floating-point output of the optimization unit along a certain dimension can be determined first based on the floating-point output of the optimization unit. Then, the quantized output and the floating-point output of the optimization unit are divided by the standard deviation respectively to obtain a processed quantized output and a processed floating-point output, and a mean square error is calculated according to the processed quantized output and the processed floating-point output.

In this embodiment, the Transformer model quantized in the above way can be used for natural language processing tasks, such as text similarity, text classification, machine translation, etc. It can also be applied to speech tasks, such as speech recognition. It can also be used for visual tasks, such as image classification, target detection and target tracking.

The effects of the embodiments of the present disclosure will be described below with specific application examples.

I. License Plate Recognition Scenario

License plate recognition refers to a technology that can detect vehicles on monitored road surfaces and automatically extract vehicle license plate information (including Chinese characters, English letters, Arabic numerals and license plate color) for processing. License plate recognition is one of the important components of modern intelligent transportation systems and has a wide range of applications. Based on technologies such as digital image processing, pattern recognition, and computer vision, it analyzes vehicle images or video sequences captured by cameras to obtain the unique license plate number of each vehicle, thereby completing the recognition process. Through some subsequent processing methods, functions such as parking lot fee management, traffic flow control index measurement, vehicle location tracking, vehicle theft prevention, highway speeding automated supervision, red-light running electronic police, highway toll stations, etc can be achieved. The steps of license plate recognition mainly include first locating a position of the license plate in the image, then segmenting characters in the license plate, and finally recognizing the segmented characters to form a license plate number.

The license plate character recognition is realized based on neural networks. By using a Transformer model quantified by the method provided in the present disclosure for performing photographic character recognition, the recognition task can be completed quickly and efficiently.

II. OCR Text Recognition Scenario

Optical Character Recognition (OCR) text recognition refers to a process of electronic devices (such as scanners or digital cameras) inspecting printed characters on paper and then using character recognition methods to translate shapes into computer text, i.e., scanning text materials and then analyzing and processing the image files to obtain text and layout information.

Recognition speed is one of the main indicators for measuring the performance of an OCR system. By using a Transformer model quantified by the method provided in the present disclosure for extracting text features, the recognition speed can be improved, thereby enhancing the practicality of OCR products.

III. Pedestrian Retrieval Scenario

Pedestrian retrieval is a technology that uses computer vision techniques to determine whether a specific pedestrian exists in an image or video sequence, belonging to the problem of image retrieval.

Given a surveillance image of a pedestrian, the goal is to retrieve images of the pedestrian across different devices. The core of pedestrian retrieval lies in how to find discriminative pedestrian representations. Many recent methods use deep learning models to extract visual features. By using a Transformer model quantified by the method provided in the present disclosure, rapid feature extraction can be achieved, reducing time costs.

The method provided by the present disclosure has been described above. The apparatus provided by the present disclosure is described below.

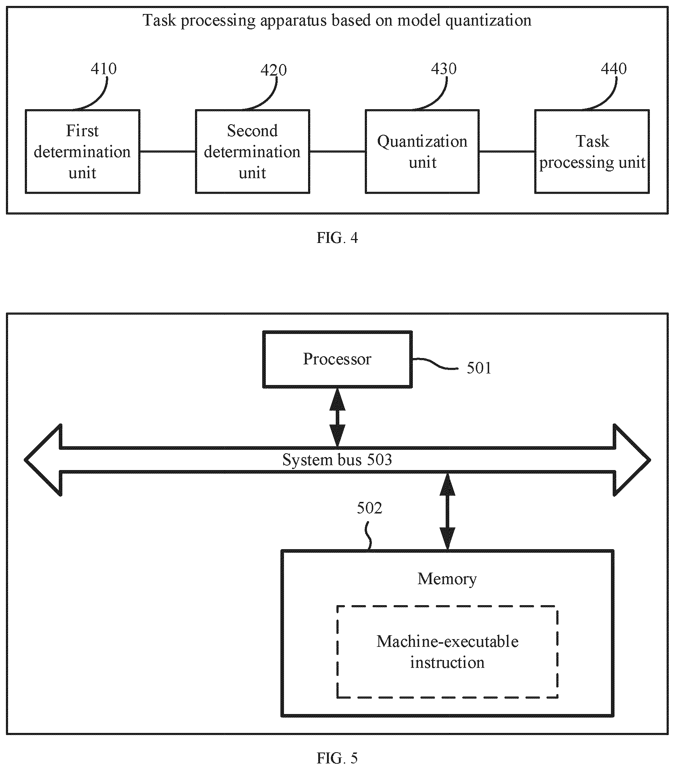

Please refer to FIG. 4, which is a structural schematic diagram of a task processing apparatus based on model quantization according to an embodiment of the present disclosure. As shown in FIG. 4, the task processing apparatus based on model quantization may include:

a first determination unit 410, configured to, for any one of optimization units in a Transformer model, obtain a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit, where the first quantized output includes an output result of the optimization unit when a weight parameter of the optimization unit is quantized based on the weight quantization factor and an input/output of the optimization unit are quantized based on the activation quantization factor, and the first floating-point output includes an output result of the optimization unit when the weight parameter of the optimization unit is a floating-point weight parameter and the input is a floating-point input;

a second determination unit 420, configured to, in a case that the floating-point weight parameter, the target weight quantization factor and the target activation quantization factor of the optimization unit are fixed, obtain a target weight quantization increment of the optimization unit by updating, with a goal of minimizing a second difference between a second quantized output and a second floating-point output of the optimization unit, a weight quantization increment of the optimization unit, where the second quantized output includes an output result of the optimization unit when the weight parameter of the optimization unit is quantized based on the target weight quantization factor and quantization adjustment is performed based on the weight quantization increment, and the input/output of the optimization unit are quantized based on the target activation quantization factor, and the second floating-point output includes an output result of the optimization unit when the weight parameter of the optimization unit is the floating-point weight parameter and the input is a floating-point input;

a quantization unit 430, configured to determine a weight quantization rounding direction of the optimization unit based on the target weight quantization increment, and obtain a target quantization weight parameter of the optimization unit by quantizing the weight parameter of the optimization unit based on the target weight quantization factor; and

a task processing unit 440, configured to in a case that the Transformer model is used for task processing, for any one of the optimization units, perform forward inference computation on input data of the optimization unit based on the target quantization weight parameter for the optimization unit, and quantize the input/output of the optimization unit based on the target activation quantization factor of the optimization unit.

In some embodiments, the first determination unit 410, when obtaining a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit, is configured to:

determine a first quantization loss of the optimization unit by using a first preset loss function and based on the first quantized output and the first floating-point output of the optimization unit; and

obtain the target weight quantization factor and the target activation quantization factor of the optimization unit by iteratively updating, with a goal of minimizing the first quantization loss of the optimization unit, the weight quantization factor and the activation quantization factor of the optimization unit by using a gradient descent algorithm until a first preset termination condition is met.

In some embodiments, the second determination unit 420, when obtaining a target weight quantization increment of the optimization unit by updating, with a goal of minimizing a second difference between a second quantized output and a second floating-point output of the optimization unit, a weight quantization increment of the optimization unit, is configured to:

determine a second quantization loss of the optimization unit by using a second preset loss function and based on the second quantized output and the second floating-point output of the optimization unit; and

obtain the target weight quantization increment of the optimization unit by iteratively updating, with a goal of minimizing the second quantization loss of the optimization unit, the weight quantization increment of the optimization unit by using a gradient descent algorithm until a second preset termination condition is met.

In some embodiments, the second determination unit quantizing the weight parameter of the optimization unit based on the target weight quantization factor and performing quantization adjustment based on the weight quantization increment is achieved by following formula:

$$W'' = Floor(W/s) + sigmoid\left(\frac{V}{t}\right)$$

where W" is a weight parameter after quantization adjustment of the optimization unit, W is the floating-point weight parameter of the optimization unit, s is the target weight quantization factor, V is the weight quantization increment, and t is a hyperparameter for controlling the sigmoid function, in the process of iteratively updating the weight quantization increment of the optimization unit, t gradually decreases, and Floor () is a rounding down operation.

In some embodiments, the quantization unit 430 obtaining a target quantization weight parameter of the optimization unit by quantizing the weight parameter of the optimization unit based on the target weight quantization factor and the weight quantization rounding direction is achieved by following formula:

$$W_q = Floor(W/s) + (V > 0?\ 1:0)$$

where, $W_q$ is the target quantization weight parameter of the optimization unit, W is the floating-point weight parameter of the optimization unit, s is the target weight quantization factor, V is the target weight quantization increment, and Floor () is a rounding down operation, $(V > 0?\ 1:0)$ indicates that a value is 1 when V > 0 is true, and the value is 0 when V > 0 is false.

In some embodiments, the first determination unit 410, when determining a first quantization loss of the optimization unit by using a first preset loss function and based on the first quantized output and the first floating-point output of the optimization unit, is configured to:

determine a standard deviation of the first floating-point output of the optimization unit based on the first floating-point output of the optimization unit;

obtain a processed first quantized output by dividing the first quantized output of the optimization unit by the standard deviation; and obtaining a processed first floating-point output by dividing the first floating-point output of the optimization unit by the standard deviation; and

determine the first quantization loss of the optimization unit by using a mean squared error loss function and based on the processed first quantized output and the processed first floating-point output.

In some embodiments, the second determination unit 420, when determining a second quantization loss of the optimization unit by using a second preset loss function and based on the second quantized output and the second floating-point output of the optimization unit, is configured to:

determine a standard deviation of the second floating-point output of the optimization unit based on the second floating-point output of the optimization unit;

obtain a processed second quantized output by dividing the second quantized output of the optimization unit by the standard deviation; and obtaining a processed second floating-point output by dividing the second floating-point output of the optimization unit by the standard deviation; and

determine the second quantization loss of the optimization unit by using a mean squared error loss function and based on the processed second quantized output and the processed second floating-point output.

In some embodiments, the optimization unit in the Transformer model includes a Transformer Stage, a Transformer Block, or a single linear layer.

An embodiment of the present disclosure provides an electronic device, which includes a processor and a memory, where the memory stores machine executable instructions that can be executed by the processor, and the processor is configured to execute the machine executable instructions to realize the task processing method based on domain adaptation described above.

Please refer to FIG. 5, which is a hardware structural diagram of an electronic device according to an embodiment of the present disclosure. The electronic device may include a processor 501 and a memory 502 storing machine-executable instructions. The processor 501 and the memory 502 may communicate via a system bus 503. Moreover, by reading and executing the machine-executable instructions corresponding to the task processing logic based on domain adaptation in the memory 502, the processor 501 may execute the task processing method based on domain adaptation described above.

The memory 502 mentioned herein may be any electronic, magnetic, optical or other physical storage apparatus, and may contain or store information, such as executable instructions, data, and the like. For example, the machine-readable storage medium may be: a random access memory (RAM), a volatile memory, a non-volatile memory, a flash memory, a storage drive (e.g., a hard disk drive), a solid state drive, any type of storage disk (e.g., optical disk, dvd, etc.), or the like, or a combination thereof.

In some embodiments, a storage medium is further provided, such as the memory 502 in FIG. 5. The storage medium is a machine-readable storage medium, and machine-executable instructions are stored in the storage medium. When the machine-executable instructions are executed by the processor, the task processing method based on domain adaptation described above is implemented. For example, the storage medium may be a read-only memory (ROM), an RAM, a compact disc read-only memory (CD-ROM), a magnetic tape, a floppy disk, an optical data storage device, etc.

It should be noted that, relational terms here such as first and second are only used to distinguish one entity or operation from another entity or operation, and do not necessarily require or imply that there is any such actual relationship or order between these entities or operations. Moreover, the terms "including", "containing" or any other variations thereof are intended to cover non-exclusive inclusion, so that a process, method, object or device including a series of elements not only includes those elements, but also includes other elements not explicitly listed or elements inherent to such process, method, object or device. Without further limitations, an element defined by the phrase "including one" does not exclude the existence of other identical elements in the process, method, object or device including the element.

The above is only preferred embodiments of the present disclosure, and it is not used to limit the present disclosure. Any modification, equivalent substitution, improvement made within the spirit and principle of the present disclosure should be included in the protection scope of the present disclosure.

**Claims**

1. A task processing method based on model quantization, comprising:

for any one of optimization units in a Transformer model,

obtaining a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit, wherein

the first quantized output comprises an output result of the optimization unit when a weight parameter of the optimization unit is quantized based on the weight quantization factor and an input and an output of the optimization unit are quantized based on the activation quantization factor, and

the first floating-point output comprises an output result of the optimization unit when the weight parameter of the optimization unit is a floating-point weight parameter and the input is a floating-point input;

in a case that the floating-point weight parameter, the target weight quantization factor and the target activation quantization factor of the optimization unit are fixed, obtaining a target weight quantization increment of the optimization unit by updating, with a goal of minimizing a second difference between a second quantized output and a second floating-point output of the optimization unit, a weight quantization increment of the optimization unit, wherein

the second quantized output comprises an output result of the optimization unit when the weight parameter of the optimization unit is quantized based on the target weight quantization factor and quantization adjustment is performed based on the weight quantization increment, and the input and the output of the optimization unit are quantized based on the target activation quantization factor, and

the second floating-point output comprises an output result of the optimization unit when the weight parameter of the optimization unit is the floating-point weight parameter and the input is a floating-point input;

determining a weight quantization rounding direction of the optimization unit based on the target weight quantization increment;

obtaining a target quantization weight parameter of the optimization unit by quantizing the weight parameter of the optimization unit based on the target weight quantization factor and the weight quantization rounding direction; and

in a case that the Transformer model is used for task processing, for any one of the optimization units,

performing forward inference computation on input data of the optimization unit based on the target quantization weight parameter for the optimization unit, and
quantizing the input and the output of the optimization unit based on the target activation quantization factor of the optimization unit.

2. The method according to claim 1, wherein the obtaining a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit comprises:

determining a first quantization loss of the optimization unit by using a first preset loss function and based on the first quantized output and the first floating-point output of the optimization unit; and
obtaining the target weight quantization factor and the target activation quantization factor of the optimization unit by iteratively updating, with a goal of minimizing the first quantization loss of the optimization unit, the weight quantization factor and the activation quantization factor of the optimization unit by using a gradient descent algorithm until a first preset termination condition is met.

3. The method according to claim 1 or 2, wherein the obtaining a target weight quantization increment of the optimization unit by updating, with a goal of minimizing a second difference between a second quantized output and a second floating-point output of the optimization unit, a weight quantization increment of the optimization unit comprises:

determining a second quantization loss of the optimization unit by using a second preset loss function and based on the second quantized output and the second floating-point output of the optimization unit; and
obtaining the target weight quantization increment of the optimization unit by iteratively updating, with a goal of minimizing the second quantization loss of the optimization unit, the weight quantization increment of the optimization unit by using a gradient descent algorithm until a second preset termination condition is met.

4. The method according to claim 3, wherein quantizing the weight parameter of the optimization unit based on the target weight quantization factor and performing quantization adjustment based on the weight quantization increment are achieved by following formula:

$$W'' = Floor(W/s) + sigmoid\left(\frac{V}{t}\right)$$

wherein, W″ is a weight parameter after quantization adjustment of the optimization unit, W is the floating-point weight parameter of the optimization unit, s is the target weight quantization factor, V is the weight quantization increment, and t is a hyperparameter for controlling the sigmoid function, in the process of iteratively updating the weight quantization increment of the optimization unit, t gradually decreases, and Floor () is a rounding down operation.

5. The method according to any one of claims 1 to 4, wherein the obtaining a target quantization weight parameter of the optimization unit by quantizing the weight parameter of the optimization unit based on the target weight quantization factor and the weight quantization rounding direction is achieved by following formula:

$$W_q = Floor(W/s) + (V > 0?\ 1:0)$$

wherein, $W_q$ is the target quantization weight parameter of the optimization unit, W is the floating-point weight parameter of the optimization unit, s is the target weight quantization factor, V is the target weight quantization increment, and Floor () is a rounding down operation, (V>0? 1: 0) indicates that a value is 1 when V > 0 is true, and the value is 0 when V > 0 is false.

6. The method according to claim 2, wherein the determining a first quantization loss of the optimization unit by using a first preset loss function and based on the first quantized output and the first floating-point output of the optimization unit comprises:

determining a standard deviation of the first floating-point output of the optimization unit based on the first floating-point output of the optimization unit;

obtaining a processed first quantized output by dividing the first quantized output of the optimization unit by the standard deviation; and obtaining a processed first floating-point output by dividing the first floating-point output of the optimization unit by the standard deviation; and

determining the first quantization loss of the optimization unit by using a mean squared error loss function and based on the processed first quantized output and the processed first floating-point output.

7. The method according to claim 3, wherein the determining a second quantization loss of the optimization unit by using a second preset loss function and based on the second quantized output and the second floating-point output of the optimization unit comprises:

determining a standard deviation of the second floating-point output of the optimization unit based on the second floating-point output of the optimization unit;

obtaining a processed second quantized output by dividing the second quantized output of the optimization unit by the standard deviation; and obtaining a processed second floating-point output by dividing the second floating-point output of the optimization unit by the standard deviation; and

determining the second quantization loss of the optimization unit by using a mean squared error loss function and based on the processed second quantized output and the processed second floating-point output.

8. The method according to any one of claims 1 to 7, wherein the optimization unit in the Transformer model comprises a Transformer Stage, a Transformer Block, or a single linear layer.

9. A task processing apparatus based on model quantization, comprising:

a first determination unit, configured to, for any one of optimization units in a Transformer model, obtain a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit, wherein the first quantized output comprises an output result of the optimization unit when a weight parameter of the optimization unit is quantized based on the weight quantization factor and an input and an output of the optimization unit are quantized based on the activation quantization factor, and the first floating-point output comprises an output result of the optimization unit when the weight parameter of the optimization unit is a floating-point weight parameter and the input is a floating-point input;

a second determination unit, configured to, in a case that the floating-point weight parameter, the target weight quantization factor and the target activation quantization factor of the optimization unit are fixed, obtain a target weight quantization increment of the optimization unit by updating, with a goal of minimizing a second difference between a second quantized output and a second floating-point output of the optimization unit, a weight quantization increment of the optimization unit, wherein the second quantized output comprises an output result of the optimization unit when the weight parameter of the optimization unit is quantized based on the target weight quantization factor and quantization adjustment is performed based on the weight quantization increment, and the input and the output of the optimization unit are quantized based on the target activation quantization factor, and the second floating-point output comprises an output result of the optimization unit when the weight parameter of the optimization unit is the floating-point weight parameter and the input is a floating-point input;

a quantization unit, configured to determine a weight quantization rounding direction of the optimization unit based on the target weight quantization increment; and obtain a target quantization weight parameter of the optimization unit by quantizing the weight parameter of the optimization unit based on the target weight quantization factor and the weight quantization rounding direction; and

a task processing unit, configured to in a case that the Transformer model is used for task processing, for any one of the optimization units, perform forward inference computation on input data of the optimization unit based on the target quantization weight parameter for the optimization unit, and quantize the input/output of the optimization unit based on the target activation quantization factor of the optimization unit.

10. The apparatus according to claim 9, wherein the first determination unit, when obtaining a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit, is configured to:

determine a first quantization loss of the optimization unit by using a first preset loss function and based on the first quantized output and the first floating-point output of the optimization unit; and

obtain the target weight quantization factor and the target activation quantization factor of the optimization unit by iteratively updating, with a goal of minimizing the first quantization loss of the optimization unit, the weight quantization factor and the activation quantization factor of the optimization unit by using a gradient descent algorithm until a first preset termination condition is met.

11. The apparatus according to claim 9 or 10, wherein the second determination unit, when obtaining a target weight quantization increment of the optimization unit by updating, with a goal of minimizing a second difference between a second quantized output and a second floating-point output of the optimization unit, a weight quantization increment of the optimization unit, is configured to:

determine a second quantization loss of the optimization unit by using a second preset loss function and based on the second quantized output and the second floating-point output of the optimization unit; and

obtain the target weight quantization increment of the optimization unit by iteratively updating, with a goal of minimizing the second quantization loss of the optimization unit, the weight quantization increment of the optimization unit by using a gradient descent algorithm until a second preset termination condition is met.

12. The apparatus according to claim 11, wherein the second determination unit quantizing the weight parameter of the optimization unit based on the target weight quantization factor and performing quantization adjustment based on the weight quantization increment is achieved by following formula:

$$W'' = Floor(W/s) + sigmoid\left(\frac{V}{t}\right)$$

wherein W" is a weight parameter after quantization adjustment of the optimization unit, W is the floating-point weight parameter of the optimization unit, s is the target weight quantization factor, V is the weight quantization increment, and t is a hyperparameter for controlling the sigmoid function, in the process of iteratively updating the weight quantization increment of the optimization unit, t gradually decreases, and Floor () is a rounding down operation.

13. The apparatus according to any one of claims 9 to 12, wherein the quantization unit obtaining a target quantization weight parameter of the optimization unit by quantizing the weight parameter and the weight quantization rounding direction of the optimization unit based on the target weight quantization factor is achieved by following formula:

$$W_q = Floor(W/s) + (V > 0?\ 1:0)$$

wherein, $W_q$ is the target quantization weight parameter of the optimization unit, W is the floating-point weight parameter of the optimization unit, s is the target weight quantization factor, V is the target weight quantization increment, and Floor () is a rounding down operation, (V>0? 1: 0) indicates that a value is 1 when V > 0 is true, and the value is 0 when V > 0 is false.

14. The apparatus according to claim 9, wherein the first determination unit, when determining a first quantization loss of the optimization unit by using a first preset loss function and based on the first quantized output and the first floating-point output of the optimization unit, is configured to:

determine a standard deviation of the first floating-point output of the optimization unit based on the first floating-point output of the optimization unit;

obtain a processed first quantized output by dividing the first quantized output of the optimization unit by the standard deviation; and obtaining a processed first floating-point output by dividing the first floating-point output of the optimization unit by the standard deviation; and

determine the first quantization loss of the optimization unit by using a mean squared error loss function and based on the processed first quantized output and the processed first floating-point output.

15. The apparatus according to claim 10, wherein the second determination unit, when determining a second quantization loss of the optimization unit by using a second preset loss function and based on the second quantized output and the second floating-point output of the optimization unit, is configured to:

determine a standard deviation of the second floating-point output of the optimization unit based on the second floating-point output of the optimization unit;

obtain a processed second quantized output by dividing the second quantized output of the optimization unit by the standard deviation; and obtaining a processed second floating-point output by dividing the second floating-point output of the optimization unit by the standard deviation; and

determine the second quantization loss of the optimization unit by using a mean squared error loss function and based on the processed second quantized output and the processed second floating-point output.

16. The apparatus according to any one of claims 9 to 15, wherein the optimization unit in the Transformer model comprises a Transformer Stage, a Transformer Block, or a single linear layer.

17. An electronic device, comprising a processor and a memory, wherein the memory stores machine-executable instructions executable by the processor, and the processor is configured to execute the machine-executable instructions to implement the method according to any one of claims 1 to 8.

18. A storage medium, wherein machine executable instructions are stored in the storage medium, and when the machine-executable instructions are executed by a processor, the method according to any one of claims 1 to 8 is implemented.

For any one of optimization units in a Transformer model, obtain a target weight quantization factor and a target activation quantization factor of the optimization unit by updating, with a goal of minimizing a first difference between a first quantized output and a first floating-point output of the optimization unit, a weight quantization factor and an activation quantization factor of the optimization unit ⟋—S100

In a case that the floating-point weight parameter, the target weight quantization factor and the target activation quantization factor of the optimization unit are fixed, obtain a target weight quantization increment of the optimization unit by updating, with a goal of minimizing a second difference between a second quantized output and a second floating-point output of the optimization unit, a weight quantization increment of the optimization unit ⟋—S110

Determine a weight quantization rounding direction of the optimization unit based on the target weight quantization increment, and obtain a target quantization weight parameter of the optimization unit by quantizing the weight parameter of the optimization unit based on the target weight quantization factor and the weight quantization rounding direction ⟋—S120

In a case that the Transformer model is used for task processing, for any one of the optimization units, perform forward inference computation on input data of the optimization unit based on the target quantization weight parameter for the optimization unit, and quantize the input/output of the optimization unit based on the target activation quantization factor of the optimization unit ⟋—S130

FIG. 1

| | | | | |
|---|---|---|---|---|
| Application Layer | Target detection | License plate recognition | Text recognition | Speech recognition | ...... |

| | | | | | |
|---|---|---|---|---|---|
| Algorithm Layer | Training Strategy | Loss design | ...... | Quantization | Pruning | ...... |

System Layer

| Model training | Computational graph analysis | Compression and transformation |
|---|---|---|
| Model reading and writing · Data reading · ...... | Quantum Encapsulation · Graph Transformation · ...... | Model Pruning · Model Quantization · ...... |

| | | | | |
|---|---|---|---|---|
| Dependency Layer | CUDA | Pytorch | Python | C++ | ...... |

| | | | | |
|---|---|---|---|---|
| Device layer | CPU | GPU | ARM | MLU | ...... |

FIG. 2

Input: Float (Floating-point input) → Block: Float (Optimization unit in floating-point state) → Output: Float (Floating-point output)

Input: Quant (Quantization input) → Block: Quant (Optimization unit in quantization state) → Output: Quant (Quantization output)

Quantization factor → Block: Quant

Output: Float, Output: Quant → Loss (Loss)

FIG. 3

Task processing apparatus based on model quantization

410
420
430
440

First determination unit

Second determination unit

Quantization unit

Task processing unit

FIG. 4

Processor — 501

System bus 503

502

Memory

Machine-executable instruction

FIG. 5

# INTERNATIONAL SEARCH REPORT

| | International application No. |
|---|---|
| | **PCT/CN2023/121487** |

## A. CLASSIFICATION OF SUBJECT MATTER

G06N 3/048(2023.01)i

According to International Patent Classification (IPC) or to both national classification and IPC

## B. FIELDS SEARCHED

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNTXT; CNABS; EPTXT; USTXT; WOTXT; VEN; CNKI; IEEE: 模型, 量化, 权重, 激活, 系数, 增量, 取整, 方向, model, quantify, weight, activate, coefficient, increment, rounding, direction

## C. DOCUMENTS CONSIDERED TO BE RELEVANT

| Category* | Citation of document, with indication, where appropriate, of the relevant passages | Relevant to claim No. |
|---|---|---|
| PX | CN 115860068 A (HANGZHOU HIKVISION DIGITAL TECHNOLOGY CO., LTD.) 28 March 2023 (2023-03-28)<br>  claims 1-11, and description, paragraphs 29-193 | 1-18 |
| A | CN 113011571 A (SOUTH CHINA UNIVERSITY OF TECHNOLOGY) 22 June 2021 (2021-06-22)<br>  description, paragraphs 6-11 | 1-18 |
| A | CN 114861907 A (NETEASE (HANGZHOU) NETWORK CO., LTD.) 05 August 2022 (2022-08-05)<br>  description, paragraphs 6-10 | 1-18 |
| A | US 2020218982 A1 (MICROSOFT TECHNOLOGY LICENSING LLC.) 09 July 2020 (2020-07-09)<br>  entire document | 1-18 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 November 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121487**

| Patent document cited in search report | | | Publication date (day/month/year) | Patent family member(s) | | | Publication date (day/month/year) |
|---|---|---|---|---|---|---|---|
| CN | 115860068 | A | 28 March 2023 | None | | | |
| CN | 113011571 | A | 22 June 2021 | CN | 113011571 | B | 20 September 2022 |
| CN | 114861907 | A | 05 August 2022 | None | | | |
| US | 2020218982 | A1 | 09 July 2020 | EP | 3906507 | A1 | 10 November 2021 |
| | | | | WO | 2020142223 | A1 | 09 July 2020 |

Form PCT/ISA/210 (patent family annex) (July 2022)